Europäisches Patentamt

European Patent Office

Office européen des brevets

(19)

(11) Veröffentlichungsnummer : **0 192 803**
**B1**

(12)                 EUROPÄISCHE PATENTSCHRIFT

(45) Veröffentlichungstag der Patentschrift :
02.03.88

(21) Anmeldenummer : 85104640.9

(22) Anmeldetag : 17.04.85

(51) Int. Cl.⁴ : **B 65 G 53/60**, B 01 D 46/12

(54) **Zellenradschleuse zum Abscheiden feinteiliger Feststoffe aus einem Luftstrom.**

(30) Priorität : 27.02.85 DE 8505540 U

(43) Veröffentlichungstag der Anmeldung :
03.09.86 Patentblatt 86/36

(45) Bekanntmachung des Hinweises auf die Patenterteilung : 02.03.88 Patentblatt 88/09

(84) Benannte Vertragsstaaten :
AT CH DE LI

(56) Entgegenhaltungen :
EP-A- 0 004 125
DE-A- 2 338 675
DE-B- 1 269 948
DE-C-   497 967

(73) Patentinhaber : Höcker Polytechnik GmbH
Borgloher Strasse 1
D-4517 Hilter 1 (DE)

(72) Erfinder : Biehl, Dieter
Zur Steinbrede 54
D-4504 Georgsmarienhütte (DE)
Erfinder : Höcker, Günther
Borgloher Strasse 1
D-4517 Hilter 1 (DE)

(74) Vertreter : Busse & Busse Patentanwälte
Postfach 1226 Grosshandelsring 6
D-4500 Osnabrück (DE)

EP 0 192 803 B1

**Beschreibung**

Die Erfindung betrifft eine Zellenradschleuse zum Abscheiden feinteiliger Feststoffe aus einem Luftstrom, bestehend aus einem für einen Umlauf in einer Gehäusetrommel drehbar abgestützten Zellenrad, einer Anschlußöffnung in der Gehäusetrommel für eine Verbindung mit einer Förderleitung zum Zuführen und Einspeisen des die Feststoffe enthaltenden Luftstroms in die Zellen des Zellenrades, einem über ein Sieb mit der Anschlußöffnung in Verbindung stehenden Auslaß zum Abfördern des Luftstroms und mit einer Auswurföffnung für mittels des Siebes aus dem Luftstrom abgeschiedene Feststoffteilchen.

Bei einer bekannten Zellenradschleuse dieser Art sind der Auslaß zum Abfördern des Luftstroms und das Sieb unmittelbar dem Zellenrad selbst zugeordnet, derart, daß die Trennung von Förderluft und Feststoffteilchen sowie das Abführen der Förderluft einerseits und das Ausschleusen der Feststoffteilchen andererseits direkt über die Zellen bzw. die Zellenwände des Zellenrades erfolgt. Zu diesem Zweck sind die Zellen des Zellenrades in äußere Zellentaschen und innere, an den Auslaß zum Abfördern des Luftstroms angeschlossene Zellenkammern unterteilt, die jeweils durch Siebe zwischen den Zellen pneumatisch miteinander in Verbindung stehen. Durch diese Ausgestaltung ist zwar eine kompakte Bauweise der Zellenradschleuse erreicht, jedoch sind derartige Zellenradschleusen mit in die Zellenwände integrierten Trennsieben nicht für einen Betrieb mit hohen Luftdurchsätzen geeignet, um in feiner Verteilung im Luftstrom enthaltene leichte Feststoffteilchen, wie Papierabfälle, wirksam aus dem Luftstrom abzuscheiden. Dies ist vor allen Dingen dadurch bedingt, daß die im Inneren des Zellenrades angeordneten Trennsiebe der bekannten Zellenradschleuse nur begrenzte Durchtrittsflächen für die in das Zellenrad eingespeisten Luftvolumen darbieten.

Der Erfindung liegt die Aufgabe zugrunde, eine Zellenradschleuse der eingangs angegebenen Art zu schaffen, die ohne nennenswerte Erhöhung ihrer Baugröße in der Lage ist, große Luftvolumen pro Zeiteinheit aufzunehmen und in diesen verteilte Feststoffpartikel wirksam aus dem Luftstrom abzuscheiden.

Diese Aufgabe wird nach der Erfindung dadurch gelöst, daß das Sieb von einem Lochblechmantel gebildet ist, der die an die gehäuseseitige Anschlußöffnung angrenzende Seite der Gehäusetrommel im wesentlichen zur Hälfte ihrer Umfangsfläche einnimmt, und daß der Lochblechmantel außen mit Abstand von einem Abdeckkasten umgeben ist, der mit dem Lochblechmantel einen umlaufenden, in den Auslaß zum Abfördern des Luftstroms einmündenden Luftleitkanal für die durch den Lochblechmantel hindurchgetretene Luft bildet. Bei dieser Ausgestaltung können dadurch, daß praktisch die Hälfte der Umfangsfläche der Gehäusetrommel durch den vorgesehenen Lochblechmantel als Siebfläche ausgebildet ist, große Luftvolumen in Verbindung mit dem durch den äußeren Abdeckkasten gebildeten umlaufenden Luftleitkanal unter gleichzeitiger wirksamer Ausscheidung der im Luftstrom enthaltenen Feststoffteilchen durchgeschleust werden, ohne daß es zu Blockierungen kommt und die Baugröße wesentlich erhöht ist.

Die Luftdurchtrittsflächen können in weiterer Ausgestaltung der Erfindung dadurch noch vergrößert werden, daß auch die beiden Stirnseiten der Gehäusetrommel in ihren der Umfangslänge des Lochblechmantels entsprechenden Flächenbereichen sowie ein an die gehäuseseitige Anschlußöffnung angesetzter gesonderter Verbindungsstutzen im Bereich des umlaufenden Luftleitkanals ihrerseits aus Lochblech bestehen.

Die Zellenwände sind in der erfindungsgemäß ausgestalteten Zellenradschleuse vorzugsweise an ihren radialen Seitenrändern und ihren Außenrändern mit Dichtungs- und Abstreifleisten aus elastischem Werkstoff versehen, die mit den Innenseiten der Stirnwände und der inneren Umfangsfläche der Gehäusetrommel in Eingriff gehalten sind. Hierdurch sind die einzelnen Zellen des Zellenrades jeweils gegeneinander abgedichtet, so daß im Interesse einer großen Betriebssicherheit und einer hohen Materialabscheidungsleistung die durch die gehäuseseitige Anschlußöffnung eingespeisten Luftmengen gezwungen sind, lediglich über die Lochblechbestandteile der Gehäusetrommel durch den Auslaß zum Abfördern des Luftstroms die Zellenradschleuse zu verlassen. Die im Luftstrom ursprünglich enthaltenen Feststoffteilchen, wie bei der Papierverarbeitung vom Stanzen, Besäumen u. dgl. herrührende Papierabfälle, die dabei an der Innenseite des Lochblechmantels und der gelochten Stirnseitenbereiche der Gehäusetrommel haften bleiben, werden beim Umlauf des Zellenrades von den elastischen Zellenwandleisten zugleich sicher abgestreift und entlang der Innenseite des lochfreien Gehäusetrommelbereichs zur Auswurföffnung gefördert.

Weitere Merkmale und Vorteile der Erfindung ergeben sich aus den Ansprüchen und der nachstehenden Beschreibung in Verbindung mit der Zeichnung, in der zwei Ausführungsbeispiele des Gegenstands der Erfindung schematisch veranschaulicht sind. In der Zeichnung zeigen :

Fig. 1 eine Seitenansicht einer erfindungsgemäßen Zellenradschleuse zum Abscheiden feinteiliger Feststoffe, wie Papierabfälle, aus einem Luftstrom,

Fig. 2 eine teilweise geschnitte Draufsicht auf die Zellenradschleuse nach Fig. 1,

Fig. 3 einen Schnitt nach der Linie III-III der Fig. 2 und

Fig. 4 eine Darstellung entsprechend Fig. 3 zur Veranschaulichung einer abgewandelten Ausführungsform.

Die in der Zeichnung dargestellte Zellenradschleuse zum Abscheiden feinteiliger Feststoffe aus einem Luftstrom kann insbesondere in der papierverarbeitenden Industrie Anwendung finden, wobei kleine Papierabfälle, die vom Stanzen, Besäumen u. dgl. Bearbeitungsvorgängen herrühren, abzuscheiden sind. Für die Abförderung von den Verarbeitungsmaschinen werden dabei große Luftleistungen eingesetzt, so daß die Zellenradschleuse entsprechend große Luftmengen pro Zeiteinheit unter wirksamer Abscheidung der Feststoffe durchschleusen muß.

Die Zellenradschleuse umfaßt, wie an sich bekannt, als Hauptbestandteil ein Zellenrad 1, das mit seiner Welle 2 in den beiden Stirnseiten einer Gehäusetrommel 3 drehbar abgestützt ist. Der Antrieb der Zellenradwelle 2 erfolgt von einem auf einer Konsole 4 der Gehäusetrommel 3 angeflanschten Getriebemotor 5 über einen Kettentrieb 6.

Die Gehäusetrommel 3 umfaßt einen unteren Zylinderteil 7, der aus ungelochtem Stahlblech besteht und im Querschnitt gesehen etwas größer ist als der untere Halbkreis der Gehäusetrommel 3. Oberhalb der waagerechten Durchmesserebene der Gehäusetrommel 3 ist der Zylinderteil 7 mit einem umlaufenden waagerechten Randflansch 8 versehen. Im Bereich der senkrechten Durchmesserebene der Gehäusetrommel 3 ist der Zylinderteil 7 mit einer unteren Auswurföffnung 9 nach Art eines sich über die axiale Länge der Gehäusetrommel 3 erstreckenden Auswurfschachtes versehen.

Im Bereich des waagerechten Randflansches 8 ist ein oberer Lochblechmantel 10 mit dem unteren Zylinderteil 7 vereinigt, um gemeinsam mit diesem die Gehäusetrommel 3 zu bilden. Der Lochblechmantel 10 nimmt dabei im wesentlichen die obere Hälfte der Umfangsfläche der Gehäusetrommel 3 ein und enthält im Bereich der mittleren senkrechten Querebene der Gehäusetrommel 3 eine Anschlußöffnung 11 für eine Verbindung mit einer Förderleitung zum Zuführen und Einspeisen des die Feststoffe enthaltenden Luftstroms in das Zellenrad 1. Die beiden Stirnseiten 12 und 13 des Lochblechmantels 10 bestehen ebenfalls aus Lochblech, das wie im Falle des Lochblechmantels 10 von normalem Stahlblech mit einem Lochdurchmesser von beispielsweise etwa 2 mm gebildet sein kann.

Aus dem gleichen Lochblech besteht in seinem an den Lochblechmantel 10 angrenzenden unteren Bereich 14 ein gesonderter Verbindungsstutzen 15, der an die gehäuseseitige Anschlußöffnung 11 angesetzt und diese umgebend mit dem Lochblechmantel 10 fest verbunden, z. B. verschweißt, ist. An das der Anschlußöffnung 11 gegenüberliegende Ende des Verbindungsstutzens 15 sind bei dem dargestellten Beispiel zwei Leitungsstränge der Förderleitung für die Zuführung des Luft/Feststoff-Stroms mit Hilfe zweier Anschlußstutzen 16 anschließbar.

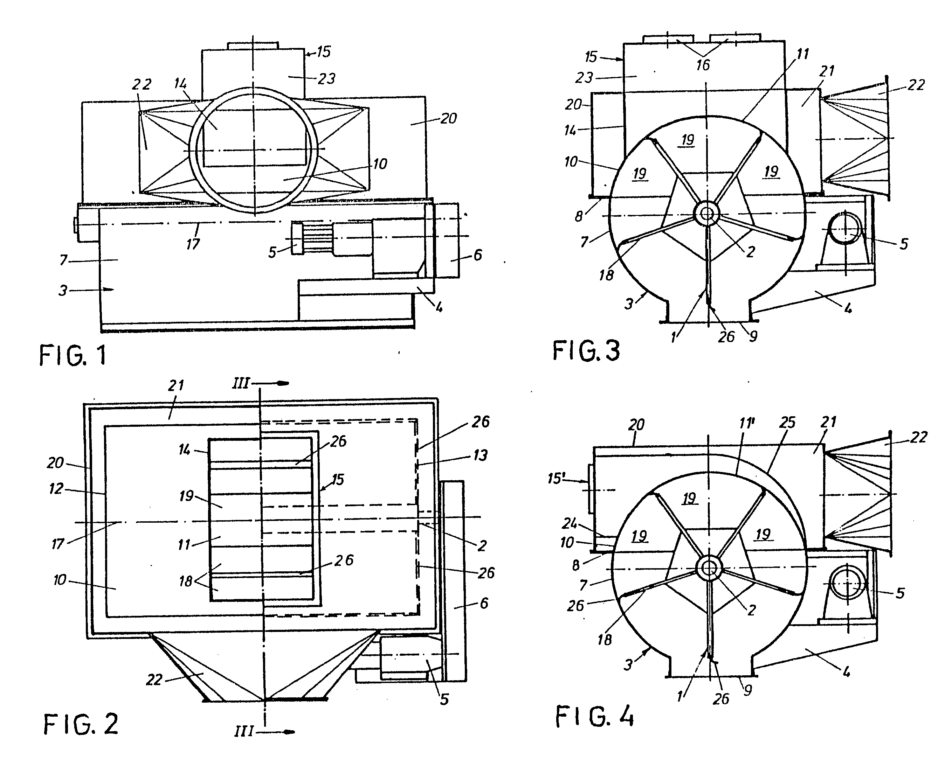

Die quer zur Drehachse 17 des Zellenrades 1 gemessene Länge der gehäuseseitigen Anschlußöffnung 11 und des an diese angrenzenden Bereichs 14 des Verbindungsstutzens 15 ist so bemessen, daß im Betriebszustand des Zellenrades 1 mit der Anschlußöffnung 11 stets zumindest zwei von den Zellenwänden 18 gebildete Zellen 19 umfangsseitig in offener Verbindung mit der Anschlußöffnung 11 stehen. In einem gegebenen Momentanzustand während des Umlaufs des Zellenrades 1 können dabei auch gleichzeitig drei Zellen 19 in offener Verbindung mit der Anschlußöffnung 11 stehen, wie es Fig. 3 zeigt. Diese Anordnung ist einem hohen Luftdurchsatz förderlich.

Die in der Ebene gemessene Länge der Anschlußöffnung 11 und des an diese angrenzenden Bereichs 14 des Verbindungsstutzens 15, wie sie in Fig. 2 zur Darstellung kommt, ist höchstens gleich der Länge einer geraden Verbindung zwischen den einander diametral gegenüberliegenden Fußpunkten des Lochblechmantels 10, wie sie durch die Ebene des Randflansches 8 definiert ist. Die Breite der Anschlußöffnung 11 und des Bereichs 14 des Verbindungsstutzens 15 beträgt dabei zweckmäßig etwa die Hälfte ihres Längenmaßes. Diese Ausgestaltung schafft vermehrte Lochflächenbereiche des Verbindungsstutzens 15 in seinem unteren Anschlußbereich 14, was eine rasche Luftdurchschleusung weiter begünstigt.

Der Lochblechmantel 10 ist außen mit Abstand von einem nach unten offenen, im übrigen aber geschlossenen Abdeckkasten 20 umgeben. Der Abdeckkasten 20 ist auf den Randflansch 8 aufgesetzt und mit diesem fest verbunden. Zusammen mit dem Lochblechmantel 10 bildet der Abdeckkasten 20 einen umlaufenden Luftleitkanal 21, der den Lochblechmantel 10 mit dem gelochten Bereich 14 des Verbindungsstutzens 15 allseits umgibt und für eine rasche Abförderung der durch die Lochblechöffnungen austretenden Luft zu einem Auslaß 22 Sorge trägt, der in Form eines Stutzens an den Abdeckkasten 20 angeformt oder mit diesem in sonst geeigneter Weise verbunden ist.

Auf diesen Luftleitkanal 21 ist der Lochblechbereich 14 des Verbindungsstutzens 15 beschränkt. Der obere Teil 23 des Verbindungsstutzens 15 besteht aus ungelochtem Blech und ist an der geschlossenen Oberseite des Abdeckkastens 20 mittels eines Randflansches befestigt.

Während bei dem Ausführungsbeispiel nach den Fig. 1 bis 3 der Verbindungsstutzen 15 senkrecht von oben über die gehäuseseitige Anschlußöffnung 11 in den Lochblechmantel 10 des Zellenrades 1 einmündet, zeigt Fig. 4 eine Ausgestaltung, bei der der Verbindungsstutzen 15' in seitlicher Ausrichtung über die Anschlußöffnung 11' in den Lochblechmantel 10 des Zellenrades 1 einmündet. Der Verbindungsstutzen 15' hat eine kurze innere oder untere an den Lochblechmantel 10 anschließende, die Anschlußöffnung 11' hier randseitig begrenzende Wand 24 und eine der Krümmung des Lochblechmantels 10 folgende Außenwand 25, die an ihrem Ende in Höhe des Randflansches 8 an den Lochblechmantel 10 anschließt und hier die Anschlußöffnung 11' randseitig begrenzt. Die Außenwand 25 und die diese mit der Innenwand 24 verbindenden Seitenwände sowie ggf. auch die kurze Innenwand 24 selbst bestehen wiederum aus Lochblech analog dem Lochblechbereich 14 des Verbindungsstutzens 15. Diese Anordnung des Verbindungsstutzens 15' ermöglicht eine tangentiale Einströmung des Luft/Feststoff-Stroms über die Anschlußöffnung 11' in den Lochblechmantel 10 bzw. die umfangsseitig offenen Zellen 19, die beim Umlauf des Zellenrades 1 an der Anschlußöffnung 11' jeweils dargeboten werden. Die tangentiale Einströmung des Luftstroms kann sich unter bestimmten Betriebsbedingungen als vorteilhaft für den Luftdurchsatz erweisen. Der äußere Abdeckkasten 20 mit dem Auslaß 22 zum Abfördern des Luftstroms umgibt wie im Falle des Ausführungsbeispiels nach den Fig. 1 bis 3 den Lochblechmantel 10 sowie den Verbindungsstutzen 15', mit dessen Stirnseite er abschließt, und bildet wiederum den Luftleitkanal 21 zur raschen Abförderung des Luftstroms aus.

Bei beiden Ausführungsbeispielen sind die Zellenwände 18 an ihren radialen Seitenrändern und ihren Außenrändern mit Dichtungs- und Abstreifleisten 26 aus elastischem Werkstoff versehen, die mit den Innenseiten der Stirnwände und der inneren Umfangsfläche der Gehäusetrommel 3 sowohl in deren gelochten als auch in deren ungelochten Bereichen in Eingriff gehalten sind. Hierdurch werden im Betrieb der Zellenradschleuse die ursprünglich im Luftstrom enthaltenen Feststoffteilchen, die beim Durchschleusen des Luftstroms an der Innenseite des Lochblechmantels 10 und der gelochten Stirnseitenbereiche 12, 13 haften bleiben, abgestreift und entlang der Innenseite des lochfreien Zylinderteils 7 einschließlich dessen Stirnseiten zur Auswurföffnung 9 gefördert. Zugleich werden die Zellen 19 durch die elastischen Zellenwandleisten 26 gegeneinander bei Anlage an den lochfreien Bereichen der Gehäusetrommel 3 abgedichtet, so daß die in das Zellenrad 1 eingespeiste Luft nur über die Lochblechbereiche der Gehäusetrommel 3 einschließlich des Lochblechbereichs 14 des Verbindungsstutzens 15 aus der Gehäusetrommel 3 austreten und über den Luftleitkanal 21 zum Luftauslaß 22 gelangen kann.

Der die Feststoffe enthaltende Luftstrom wird vorzugsweise als Druckluftstrom der Zellenradschleuse zugeführt, jedoch kann diese grundsätzlich auch in eine Saugluftleitung einbezogen sein. Es versteht sich ferner, daß anstelle der in der Zeichnung dargestellten rechteckigen Durchtrittsquerschnitte der gehäuseseitigen Anschlußöffnung 11 bzw. des an diese angrenzenden Bereichs des Verbindungsstutzens 15 andere geeignete Querschnitte, wie polygonale oder kreisförmige, Anwendung finden können.

**Patentansprüche**

1. Zellenradschleuse zum Abscheiden feinteiliger Feststoffe aus einem Luftstrom, bestehend aus einem für einen Umlauf in einer Gehäusetrommel (3) drehbar abgestützten Zellenrad (1), einer Anschlußöffnung (11, 11') in der Gehäusetrommel (3) für eine Verbindung mit einer Förderleitung zum Zuführen und Einspeisen des die Feststoffe enthaltenden Luftstroms in die Zellen des Zellenrades, einem über ein Sieb mit der Anschlußöffnung (11, 11') in Verbindung stehenden Auslaß (22) zum Abfördern des Luftstroms und mit einer Auswurföffnung (9) für mittels des Siebes aus dem Luftstrom abgeschiedene Feststoffteilchen, dadurch gekennzeichnet, daß das Sieb von einem Lochblechmantel (10) gebildet ist, der die an die gehäuseseitige Anschlußöffnung (11 ; 11') angrenzende Seite der Gehäusetrommel (3) im wesentlichen zur Hälfte ihrer Umfangsfläche einnimmt und daß der Lochblechmantel (10) außen mit Abstand von einem Abdeckkasten (20) umgeben ist, der mit dem Lochblechmantel (10) einen umlaufenden, in den Auslaß (22) zum Abfördern des Luftstroms einmündenden Luftleitkanal (21) für die durch den Lochblechmantel (10) hindurchgetretene Luft bildet.

2. Zellenradschleuse nach Anspruch 1, dadurch gekennzeichnet, daß die beiden Stirnseiten (12, 13) der Gehäusetrommel (3) in ihren der Umfangslänge des Lochblechmantels (10) entsprechenden Flächenbereichen ihrerseits von außenseitig von dem Luftleitkanal (21) umgebenen Lochblechen gebildet sind.

3. Zellenradschleuse nach Anspruch 1 oder 2, dadurch gekennzeichnet, daß an die gehäuseseitige Anschlußöffnung (11 ; 11') ein gesonderter Verbindungsstutzen (15 ; 15') angesetzt ist, an dessen der gehäuseseitigen Anschlußöffnung gegenüberliegendes Ende zumindest ein Leitungsstrang der Förderleitung für die Zuführung des Luftstroms anschließbar ist.

4. Zellenradschleuse nach Anspruch 3, dadurch gekennzeichnet, daß die quer zur Drehachse (17) des Zellenrades (1) gemessene Länge der gehäuseseitigen Anschlußöffnung (11 ; 11') und des an diese angrenzenden Bereichs des Verbindungsstutzens (15 ; 15') so bemessen ist, daß im Betriebszustand des Zellenrades (1) stets zumindest zwei Zellen (19) umfangsseitig in offener Verbindung mit der Anschlußöffnung (11 ; 11') stehen.

5. Zellenradschleuse nach Anspruch 4, dadurch gekennzeichnet, daß die als Gerade gemessene Länge der Anschlußöffnung (11 ; 11') und des an diese angrenzenden Bereichs des Verbindungsstutzens (15 ; 15') höchstens gleich der Länge einer geraden Verbindung zwischen den einander diametral gegenüberliegenden Fußpunkten des Lochblechmantels (10) ist.

6. Zellenradschleuse nach Anspruch 4 oder 5, dadurch gekennzeichnet, daß die Breite der gehäuseseitigen Anschlußöffnung (11 ; 11') und des an diese angrenzenden Bereichs des Verbindungsstutzens (15 ; 15') etwa die Hälfte ihres Längenmaßes beträgt.

7. Zellenradschleuse nach einem der Ansprüche 4 bis 6, dadurch gekennzeichnet, daß der Verbindungsstutzen (15 ; 15') in seinem in den umlaufenden Luftleitkanal (21) hineinragenden Bereich seinerseits aus Lochblech besteht.

8. Zellenradschleuse nach einem der Ansprüche 4 bis 7, dadurch gekennzeichnet, daß der Verbindungsstutzen (15) senkrecht von oben über die Anschlußöffnung (11) in den Lochblechmantel (10) des Zellenrades (1) einmündet.

9. Zellenradschleuse nach einem der Ansprüche 4 bis 7, dadurch gekennzeichnet, daß der Verbindungsstutzen (15′) in seitlicher Ausrichtung über die Anschlußöffnung (11′) in den Lochblechmantel (10) des Zellenrades (1) einmündet.

10. Zellenradschleuse nach Anspruch 9, dadurch gekennzeichnet, daß der Verbindungsstutzen (15′) eine der Krümmung des Lochblechmantels (10) folgende Außenwand (25) für eine tangentiale Einströmung des Luftstroms über die Anschlußöffnung (11′) in den Lochblechmantel (10) aufweist.

11. Zellenradschleuse nach einem der Ansprüche 1 bis 10, dadurch gekennzeichnet, daß die Zellenwände (18) an ihren radialen Seitenrändern und ihren Außenrändern mit Dichtungs- und Abstreifleisten (26) aus elastischem Werkstoff versehen sind, die mit den Innenseiten der Stirnwände und der inneren Umfangsfläche der Gehäusetrommel (3) in Eingriff gehalten sind.

## Claims

1. A rotary-vane lock for separating fine solid particles out of an air stream, consisting of a rotary-vane wheel (1) rotatably supported for rotation in a housing drum (3), a connection opening (11, 11′) in the housing drum (3) for a connection to a feed pipe for supplying and feeding the stream of air containing the solids into the cells of the rotary-vane wheel, an outlet (22), which is in communication, through a screen, with the connection opening (11, 11′) to convey the stream of air away and having an ejection opening (9) for solid particles separated out of the stream of air by means of the screen, characterised in that the screen is formed by a jacket of perforated plate (10) which occupies substantially half of the circumferential area of the housing drum (3) at its side adjacent to the connection opening (11, 11′) at the housing side and in that the perforated-plate jacket (10) is surrounded, with spacing, at the outside, by a covering case (20) which, with the perforated-plate jacket (10), forms an air conduit for the air which has passed through the perforated-plate jacket (10), which air conduit leads into the outlet (22) for carrying away the stream of air.

2. A rotary-vane lock according to claim 1, characterised in that, in their surface regions corresponding to the circumferential length of the perforated-plate jacket (10), the two end faces (12, 13) of the housing drum (3) are in turn formed by perforated plates surrounded at the outside by the air conduit (21).

3. A rotary-vane lock according to claim 1 or 2, characterised in that fitted to the connection opening (11, 11′) at the housing side is a separate connecting socket (15, 15′) to the end of which situated opposite to the connection opening at the housing side, at least one train of pipes of the conveyor pipeline for supplying the stream of air can be connected.

4. A rotary-vane lock according to claim 3, characterised in that the length of the connection opening (11, 11′) at the housing side, measured transversely to the axis of rotation (17) of the rotary-vane wheel (1), and the length of the region of the connecting socket (15, 15′) adjacent to this, are so dimensioned that, in the operating state of the rotary-vane wheel (1), at least two cells (19) are always in open communication, at the circumferential side, with the connection opening (11, 11′).

5. A rotary-vane lock according to claim 4, characterised in that the length of the connection opening (11, 11′) and of the region of the connection socket (15, 15′) adjacent to this, measured as a straight line, is at most equal to the length of a straight line connection between the diametrically opposite base points of the perforated-plate jacket (10).

6. A rotary-vane lock according to claim 4 or 5, characterised in that the width of the connection opening (11, 11′) at the housing side and of the region of the connecting socket (15, 15′) adjacent to this is substantially half of its longitudinal dimension.

7. A rotary-vane lock according to any one of claims 4 to 6, characterised in that the connecting socket (15, 15′) in turn consists of perforated plate in its region projecting into the surrounding air conduit (21).

8. A rotary-vane lock according to any one of claims 4 to 7, characterised in that the connecting socket (15) opens into the perforated-plate jacket (10) of the rotary-vane wheel (1), vertically from above, through the connecting opening (11).

9. A rotary-vane lock according to any one of claims 4 to 7, characterised in that the connecting socket (15′) opens into the perforated-plate jacket (10) of the rotary-vane wheel (1) in lateral alignment, through the connecting opening (11′).

10. A rotary-vane lock according to claim 9, characterised in that the connecting socket (15′) comprises an outside wall (25) following the curvature of the perforated-plate jacket (10), for a tangential inflow of the stream of air into the perforated-plate jacket (10) through the connection opening (11′).

11. A rotary-vane lock according to any one of claims 1 to 10, characterised in that the cell walls (18) are provided, at their radial lateral edges and their outer edges, with sealing and stripping edges (26) of resilient material which are held in engagement with the insides of the end walls and the inner circumferential face of the housing drum (3).

## Revendications

1. Sas à roue cellulaire pour séparer de fines particules solides d'un flux d'air, constitué d'une roue cellulaire (1) montée à rotation de manière à tourner dans un tambour-enveloppe (3), d'une ouverture de raccordement (11 ; 11') dans le tambour-enveloppe (3) destinée à être raccordée à une conduite de transport pour amener et introduire le flux d'air contenant les particules solides dans les cellules de la roue cellulaire, d'une sortie (22) en communication avec l'ouverture de raccordement (11 ; 11') par l'intermédiaire d'un tamis pour évacuer le flux d'air et d'une ouverture d'éjection (9) pour les particules solides séparées du flux d'air au moyen du tamis, caractérisé en ce que le tamis est formé par une chemise en tôle perforée (10) qui occupe en substance la moitié de la surface périphérique du tambour-enveloppe (3) du côté qui est adjacent à l'ouverture de raccordement (11 ; 11') située du côté de l'enveloppe, et que la chemise en tôle perforée (10) est entourée, extérieurement à distance, par un caisson de coiffage (20), qui forme, avec la chemise en tôle perforée (10), un conduit de circulation (21) pour l'air qui a traversé la chemise en tôle perforée (10), s'ouvrant dans la sortie (22) d'évacuation du flux d'air.

2. Sas à roue cellulaire suivant la revendication 1, caractérisé en ce que les deux faces d'about (12, 13) du tambour-enveloppe (3) sont formées, dans leurs zones planes correspondant à la longueur circonférentielle de la chemise en tôle perforée (10), par des tôles perforées entourées extérieurement par le conduit d'air (21).

3. Sas à roue cellulaire suivant la revendication 1 ou 2, caractérisé en ce que sur l'ouverture de raccordement (11 ; 11') située du côté de l'enveloppe est rapportée une tubulure de raccordement (15 ; 15') particulière dont l'extrémité opposée à l'ouverture de raccordement située du côté de l'enveloppe peut être raccordée à au moins un branchement de la conduite de transport pour l'alimentation du flux d'air.

4. Sas à roue cellulaire suivant la revendication 3, caractérisé en ce que la longueur, mesurée perpendiculairement à l'axe de rotation (17) de la roue cellulaire (1), de l'ouverture de raccordement (11 ; 11') située du côté de l'enveloppe et de la zone de la tubulure de raccordement (15 ; 15') qui y est adjacente, est dimensionnée de façon que, dans l'état de fonctionnement de la roue cellulaire (1), au moins deux cellules (19) soient toujours en communication ouverte avec l'ouverture de raccordement (11 ; 11') du côté de la périphérie.

5. Sas à roue cellulaire suivant la revendication 4, caractérisé en ce que la longueur mesurée en ligne droite de l'ouverture de raccordement (11 ; 11') et de la zone de la tubulure de raccordement (15 ; 15') qui y est adjacente est tout au plus égale à la longueur d'une liaison rectiligne entre les points de base diamétralement opposés de la chemise en tôle perforée (10).

6. Sas à roue cellulaire suivant la revendication 4 ou 5, caractérisé en ce que la largeur de l'ouverture de raccordement (11 ; 11') située du côté de l'enveloppe et de la zone de la tubulure de raccordement (15 ; 15') qui y est adjacente est à peu près égale à la moitié de leur longueur.

7. Sas à roue cellulaire suivant l'une quelconque des revendications 4 à 6, caractérisé en ce que la tubulure de raccordement (15 ; 15') est formée d'une tôle perforée dans sa zone qui s'étend dans le conduit de circulation d'air (21).

8. Sas à roue cellulaire suivant l'une quelconque des revendications 4 à 7, caractérisé en ce que la tubulure de raccordement (15) s'ouvre verticalement du haut par l'ouverture de raccordement (11) dans la chemise en tôle perforée (10) de la roue cellulaire (1).

9. Sas à roue cellulaire suivant l'une quelconque des revendications 4 à 7, caractérisé en ce que la tubulure de raccordement (15') s'ouvre latéralement par l'ouverture de raccordement (11') dans l'enveloppe en tôle perforée (10) de la roue cellulaire (1).

10. Sas à roue cellulaire suivant la revendication 9, caractérisé en ce que la tubulure de raccordement (15') comporte une paroi extérieure (25) suivant la courbure de la chemise en tôle perforée (10) en vue d'une introduction tangentielle du flux d'air par l'intermédiaire de l'ouverture de raccordement (11') dans la chemise en tôle perforée (10).

11. Sas à roue cellulaire suivant l'une quelconque des revendications 1 à 10, caractérisé en ce que les parois de cellules (18) sont pourvues, au niveau de leurs bords latéraux radiaux et de leurs bords extérieurs, de lames d'étanchéité et de raclage (26) en matière élastique qui sont maintenues en contact avec les faces internes des parois d'about et la surface périphérique interne du tambour-enveloppe (3).